# EUROPEAN PATENT SPECIFICATION

(11) **EP 0 472 801 B1**
(45) Date of publication and mention of the grant of the patent: **11.01.1995**
(21) Application number: 90830383.7
(22) Date of filing: 28.08.1990
(51) Int. Cl.: G11B 23/113, G11B 15/08

(54) **Process and apparatus for finding one end of a magnetic tape wound onto a reel in automatic cassette loading machines**
Verfahren und Vorrichtung zum Auffinden eines Endes eines Magnetbands, das auf einer Spule in einem automatischen Kassettenladegerät aufgewickelt ist
Procédé et appareil pour trouver l'extrémité d'une bande magnétique enroulée autour d'une bobine dans un appareil de chargement automatique de cassettes

(30) Priority: 06.08.1990 IT 2122690
(43) Date of publication of application: 04.03.1992
(73) Proprietor: TAPEMATIC S.p.A., I-20052 Monza (Milano) (IT)
(72) Inventor: Perego, Luciano, I-20050 Mezzago (Milano) (IT)
(74) Representative: Righetti, Giuseppe

(56) References cited:
- EP-A- 0 281 884
- FR-A- 2 353 112
- US-A- 3 643 889

## Description

The present invention relates to a process and apparatus for finding one end in a magnetic tape wound onto a reel in automatic cassette loading machines, the tape end being fastened to the reel by a closure tab having a free end portion oriented outwardly to the reel itself.

The apparatus of the invention is of the type comprising a support hub operable in rotation and adapted to operatively engage a magnetic tape reel, commonly referred to as "pancake";
a main carriage movable according to a direction at right angles to the reel axis; and a reading member operatively supported by the main carriage.

In greater detail the process and apparatus in question are conceived for suitably arranging the end of a tape wound onto a pancake so that it may be picked up by automatic means designed to engage and guide it according to a predetermined path between the different members of a cassette loading machine.

It is known that the loading of tape cassettes is carried out in appropriate automatically operated loading machine. In these machines the cassettes to be loaded are automatically engaged, one at a time, in a loading station in which a magnetic tape continuously coming from a pancake mounted on a support hub operable in rotation, is wound in a predetermined amount at the inside of a cassette. The above loading machines have an important degree of automation so that manual interventions in operation are substantially restrained to the supply of empty cassettes into appropriate magazines associated with the machines as well as the periodical replacement of empty pancakes.

In spite of that, the above mentioned operations to be executed manually give rise to serious problems, since in this particular field it becomes increasingly more important the necessity of entrusting a single operator with the task of managing several loading machines.

In this connection it is to be pointed out that for the replacement of an empty pancake the operator, after removing the empty pancake and mounting the new one on the tape loading machine, must manually pick up the tape end of the new pancake and guide it according to a predetermined path between the different members of the loading machine through which the tape itself must pass before reaching the cassette to be loaded. The time necessary for carrying out this operation greatly reduces the possibility of entrusting a single operator with the management of several loading machines.

It will be recognized that under this situation it would be convenient that the loading machines should be associated with means adapted to automatically pick up the tape end from the new pancake mounted on the hub and guide the tape between the different loading machine members as far as it reaches the cassette loading station.

In the connection the same Applicant has devised an apparatus capable of performing the above functions. The apparatus forms the object of an Italian Patent Application filed on the same date in the name of the same Applicant.

The same Applicant has also developed a cassette loading machine equipped with different loading modules provided with respective loading stations where cassettes are loaded with tapes coming from different pancakes. In this loading machine the replacement of out of tape pancakes in the different modules is carried out by a manipulating unit which can execute a completely automatic operation just by virtue of the apparatus disclosed in the above cited patent application. Said loading machine too, as well as the manipulating unit associated therewith are the subject matter of respective Italian Patent Applications filed on the same date in the name of the same Applicant.

After the foregoing premises, it will be understood that the apparatus for picking up the use tape and engaging it in the different members of the cassette loading machine can perform its functions only if the pancake after being mounted on the hub is disposed in such a manner that the end of the tape wound thereon is located at a predetermined point from which it can be easily picked up by a grasping element associated with the apparatus itself. Since at the mounting of the pancake on the hub the position of the tape end is completely casual, the apparatus for picking up the tape must be assisted by means capable of finding the tape end on the circumferential extension of the pancake and consequently dispose the pancake so that said tape end may be located at the most appropriate position.

Due to this requirement the technical problem to be solved consists in making the operation of finding the tape end and subsequently positioning it at the right place very quick and reliable, independently of the diameter of the pancake.

At present, its is known from doc. US-A-3643889 an apparatus for automatically threading a flexible tape through a tape device. The apparatus comprises a travelling carriage movable along a straight track between the supply reel and the take up reel. The carriage brings a pivot arm which can be rotated towards the supply reel so that the end of the arm rests upon the tape wound about the reel hub. Vacuum means acting through one or more openings provided at the end of the pivot arm can engage the free end of the tape in order to move it form the supply to the take up reel. The apparatus is also provided with sensing means such as optical menas or vacuum sensing means for determining the engagement of the free end of the tape with the arm.

The main object of the present invention is therefore to solve the above technical problem by providing a process and an apparatus adapted to completely meet the above requirements.

The foregoing and further objects which will become more apparent in the course of the present description are substantially attained by a process for finding the end of a magnetic tape wound onto a reel in automatic cassette loading machines, characterized in that it comprises the following steps:
mounting the reel on a support hub; positioning a reading member at a location diametrically spaced apart from the reel; driving the reel in rotation; moving the reading member close to the reel, in a direction at right angles to the axis of the reel itself, until the peripheral edge of the reel is intercepted by the reading member; moving away the reading member a predetermined amount from the reel; stopping the reel rotation as soon as the reading member intercepts the closure tab in order to dispose said tab in a predetermined position.

Still in accordance with the present invention, the above process is put into practice by an apparatus for finding one end of a magnetic tape wound on a reel in automatic cassette loading machines, the tape end being fastened to the reel by a closure tab exhibiting a free portion, oriented outwardly to the reel itself, characterized in that said apparatus comprises: means to move the reading member with the main carriage close to the reel until the peripheral edge of the reel is intercepted by the reading member; means to move the reading member from the position it intercepts the reel to a predetermined distance from the reel; and means to stop the reel rotation when the reading member intercepts the closure tab.

Further features and advantages will be best understood from the detailed description of a preferred embodiment of a process and apparatus for finding the end of a magnetic tape wound onto a pancake in automatic cassette loading machines in accordance with the present invention, given hereinafter by way of non-limiting example with reference to the accompanying drawings, in which:
- Fig. 1 is a perspective partly cut away view of a cassette loading machine, to which the apparatus of the present invention has been mounted;

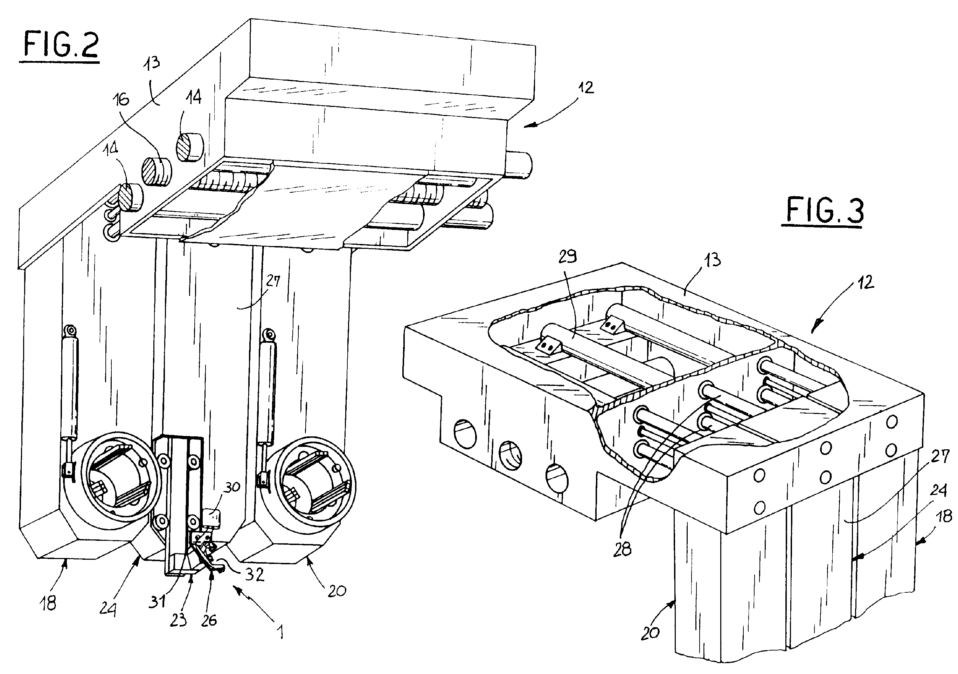

- Fig. 2 shows the apparatus mounted on a manipulating unit where the only part facing the loading machine has been shown in perspective;
- Fig. 3 is a perspective fragmentary view of the manipulating unit seen from the side opposite that shown in Fig. 2;
- Fig. 4 is a perspective view of a detail of the manipulating unit emphasizing the structure of the apparatus of the invention;
- Figs 5 through 8 are diagrammatic front views of the different steps of the process for finding the end of a tap wound onto a pancake, which process is put into practice by the apparatus of the invention.

Referring to the drawings, an apparatus for finding the end of a magnetic tape wound onto a pancake in automatic cassette loading machines in accordance with the present invention has been generally identified by reference numeral 1.

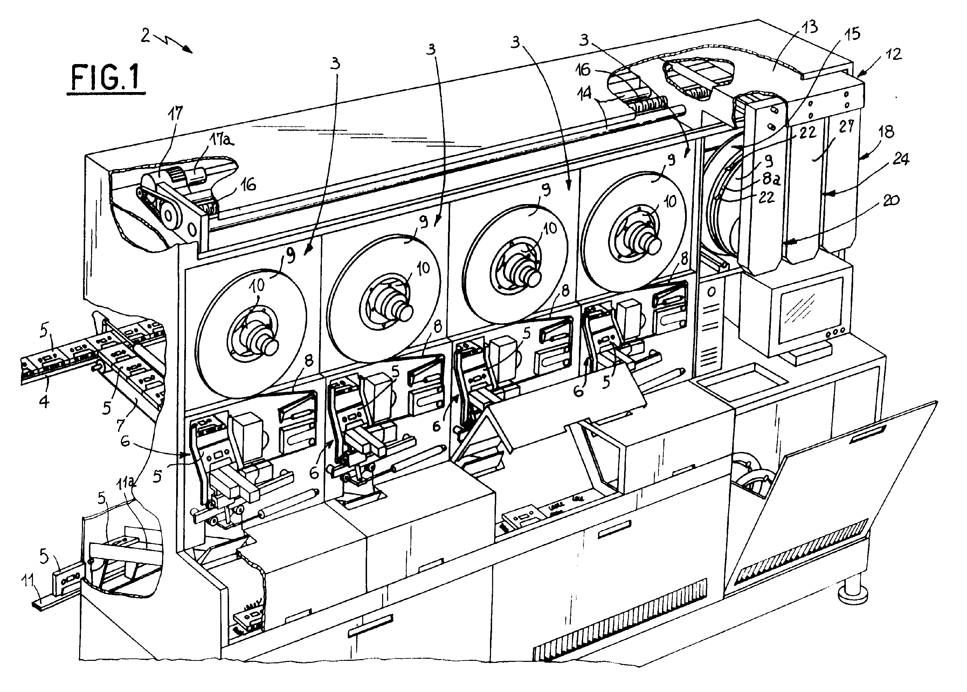

In the embodiment shown apparatus 1 is associated with an automatic cassette loading machine generally referenced by 2 in Fig. 1. Only the essential parts of the machine will be briefly described herein as the machine has already been widely disclosed in another Italian Patent Application filed on the same date in the name of the same Applicant.

The machine 2 has a number of loading modules 3 disposed in side by side relation and in mutual alignment, to which a plurality of cassettes 5 are sent by a supply conveyor 4. Each cassette will be loaded with a predetermined amount of magnetic tape 8. Each loading module 3 has a loading station 6 in which the cassettes 5 coming from a respective infeed conveyor 7 connected to the supply conveyor 4 are engaged one at a time in order to be loaded with the magnetic tape 8 continuously fed from a respective pancake 9 operatively mounted on a support hub 10 operable in rotation in a manner known per se and conventional. When the loading has been completed the cassette 5 is released from the loading station 6 and removed from the machine 2 through a discharge chute 11a terminating in a discharge conveyor 11.

When one of said pancakes 9 is out of tape 8, a manipulating unit generally identified by 12 is operated through sensor means known per se and said manipulating unit removes the empty pancake and replaces it with a new pancake provided with tape 8 which in turn has been taken from a supply magazine 15 located sideways to the loading modules 3 and carrying a plurality of tape loaded pancakes 9.

The manipulating unit 12 comprises a main carriage 13 horizontally movable along respective guide bars 14, in a direction at right angles to the axis of the pancakes 9 mounted on the respective hubs 10. The movements of the main carriage 13 take place upon command of means comprising a worm screw 16 driven by a motor 17 controlled by a conventional encoder 17a. The manipulating unit 12 is also provided with a pick-up module 18 designed to pick up the individual pancakes 9 from a supply magazine 15.

Once it has picked up a pancake 9 from the magazine 15, the manipulating unit 12 is moved elong the guide bars 14 so that it comes into register with the loading module 3 in which the pancake 9 need to be replaced. At this point a discharge module 20 disposed in side by side relation relative to the pick-up module 18 automatically removes the out of tape pancake 9 from the respective support hub 10. Then the manipulating unit 12 is again moved forward along the guide bars 14 over a short length thereof, so that said pick-up module 18 is brought in front of the hub 10 and it can fit the new pancake 9 provided with use tape 8 on the hub itself.

The structure and operation of the loading 18 and discharge 20 modules, the supply magazine 19 and the hub 10 are not further described as they have already been widely discussed in another Italian Patent Application filed on the same date in the name of the same Applicant.

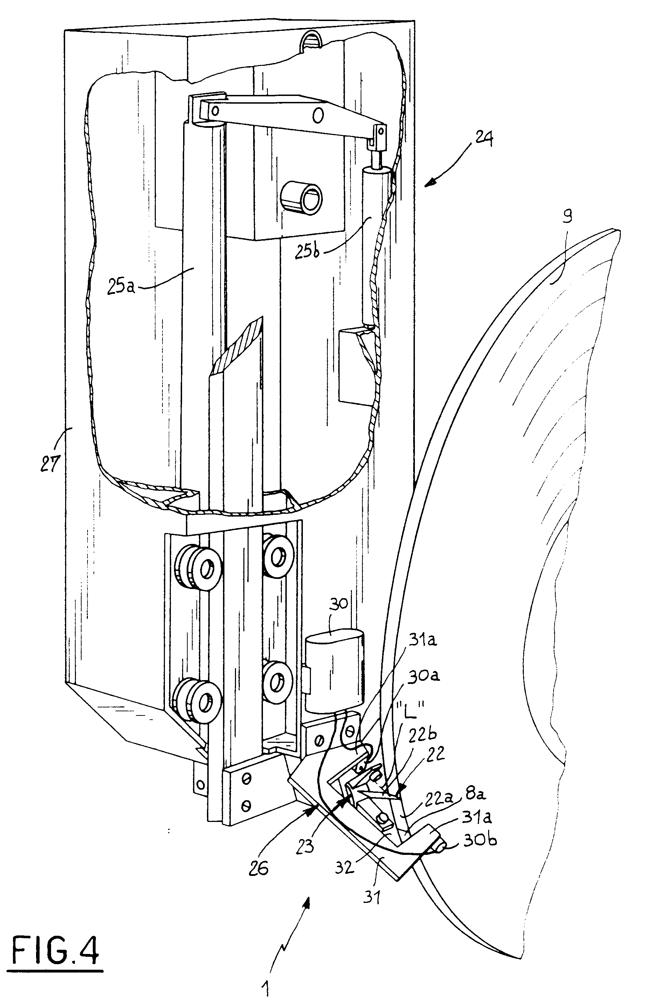

As clearly viewed from Fig. 1, each pancake 9 located in the supply magazine 15 has one end 8a of the respective tape 8 secured to the pancake itself by means of a closure tab 22. In greater detail, as more clearly shown in Fig. 4, this closure tab conventionally has an adhesive portion 22a by which the fastening of the end 8a to the pancake is carried out, as well as a free portion 22b oriented outwardly to the pancake itself.

When the pancake 9 has been engaged on the respective support hub 10, the respective closure tab 22 is randomly located at any point on the circunferential extension of the pancake itself. However it is necessary that said closure tab 22 be disposed according to a predetermined positioning so that its free portion 22b may be easily picked up by a grasping member 23 associated with a setup module 24 being part of the manipulating unit 12. Said grasping member 23, not described in detail herein as it has been already widely discussed in another Italian Patent Application filed on the same date and in the name of the same Applicant, is movable in a vertical direction upon command of one or more fluid-operated cylinders 25a, 25b so that it causes the end 8a of the tape 8 it holds to travel according to a predetermined path between the different members of the corresponding loading module 3, simultaneously with the displacements of the main carriage 13 along the guide bars 14.

In order to dispose the closure tab 22 in a position adapted for its being picked up by the grasping element 23, a reading member 26 is provided which is fastened at the lower part thereof to a support arm 27 being part of the setup module 24 and extending vertically downwardly from the main carriage 13. The support arm 27 is connected to the main carriaqe 13 by a pair of guide bars 28 allowing said arm to move upon command of a fluid-operated actuator 29 parallelly to the axes of the pancakes 9. As a result of said movement, the reading member 26 is shifted from a rest position in which it is axially spaced apart from the pancakes 9 so that it does not interfere with the support hubs 10 when the main carriage 13 is moved, to an operating condition in which it substantially operates in the same lying plane as the pancake 9 mounted to the respective support hub 10.

Preferably, the reading member 26 comprises a photoelectric cell 30 provided with a photoemitter 30a designed to emit a light beam shown in dotted lines and referenced by "L", suitably inclined relative to the axis of the pancake 9, as well as with a- photoraceiver 30b facing the photoemitter 30a so as to receive the light beam "L" emitted by the latter. The angle of inclination of the light beam "L" relative to the axis of the pancake 9 is provided to have a value in the range of 30° to 60° and it is preferably equal to 45°.

As can be seen from Fia. 4, the photoemitter 30a and photoreceiver 30b are located at the opposite ends 31a of a fork-shaped element 31 which between its ends defines a housing 32 adapted to be engaged by the outer peripheral edge of the pancake 9.

Preferably, also accommodated in the housing 32 is the grasping member 23 when at rest.

In accordance with the above described process, operation of the apparatus 1 is as follows.

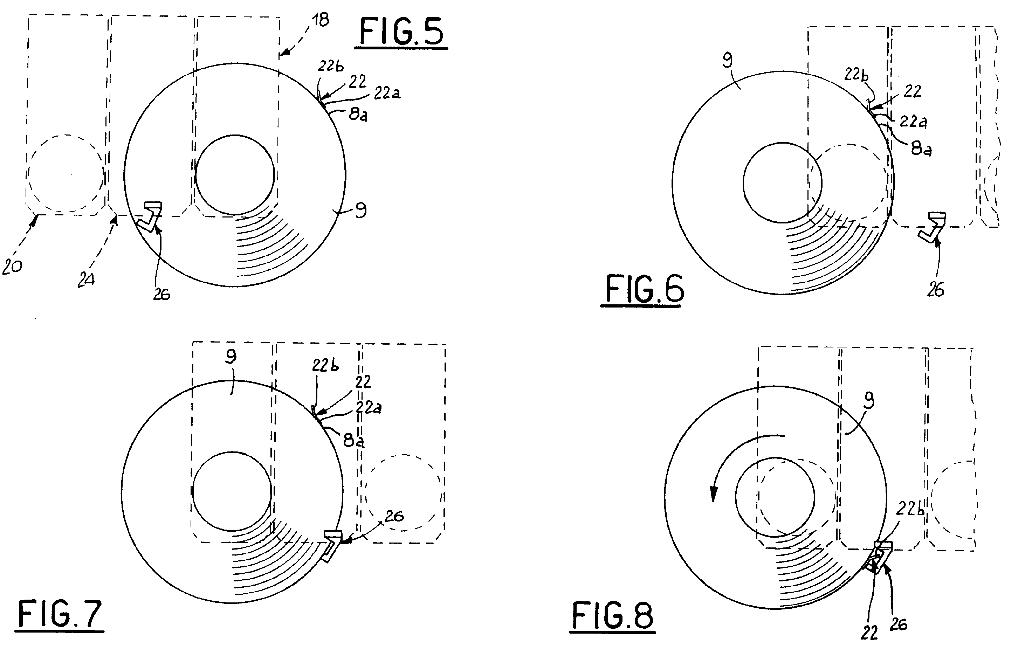

When the new pancake 9 carrying the use tape 8 is mounted on the respective support hub 10 by means of the pick-up module 18, the support arm 27 is moved apart from said pancake, so that the reading member 26 is in its rest position. Under this situation the relative positioning between the reading member 26 and the pancake 9 is as shown in Fig. 5.

Once the engagement of the pancake 9 has occurred, the main carriage 13 is moved along the guide bars 14 under the control of said encoder 13a so that the reading member 26 takes a diametrical position relative to the pancake 9 being moved apart therefrom, as shown in Fig. 6. The distance between the reading member 26 and the axis of the pancake is provided to be higher than the value of the maximum radius offered by the pancakes 9 used in the loading machine 2.

At this point the support arm 27, upon command of the actuator 29, is axially moved closer to the pancake 9 in order to bring the reading member 26 to its working position.

The step for finding the peripheral edge of the pancake 9 is about to start. To this end the main carriage 13 is moved along the guide bars 14 under the action of said means comprising the worm screw 16, the motor 17 and the encoder 17a so that the reading member 26 is moved close to the pancake 9 at right angles to the axis of the pancake itself. Under this situation within a more or less short period of time depending upon the diameter of the pancake 9, the peripheral edge of said pancake will be introduced into the housing 32 defined between the ends 31a of the fork-shaped element 31. As a result, the photoelectric cell 30 will detect the breaking of the light beam "L" emitted by the photoemitter 30 and will command the means which cause the reverse movement of the carriage 13. In greater detail, the carriage 13 is moved so that the reading member 26 is again diametrically moved away from the pancake 9 by a predetermined amount. Said distance must be sufficient to enable the light beam "L" to be intercepted by the free portion 22b of the closure tab 22 when the latter passes between the photoemitter 30a and the photoreceiver 30b as a result of a rotation imparted to the pancake 9 by the hub 10. As soon as the light beam "L" is intercepted by the closure tab 22, the photoelectric cell activates means to stop the rotation of the pancake 9 and the free end 22b will be therefore disposed in that predetermined position enabling its being picked up by the grasping member 23.

In a preferred embodiment the starting of rotation of the pancake 9 is provided to occur simultaneously with the positioning of the reading member 26 to its working position, that is before the beginning of the step in which the reading member is moved close to the pancake for detecting the peripheral edge of the latter. In this case the new moving away of the reading member 26 from the pancake 9 will occur after said pancake has carried out at least a rotation about its own axis starting from the moment at which the interception of the light beam "L" has taken place.

In this way possible uncertainties related to the operation of the apparatus will be advantageously avoided, which incertainties could occur if the closure tab 22 were positioned, when the pancake is stationary, so as to intercept the light beam "L" during the approaching step of the reading member for finding out the outer diameter of the pancake. In fact under this situation the photoelectric cell would cause the reading member 26 to be moved away from the pancake and its wrong positioning would prevent it from properly carrying out the search of the closure tab 22.

The present invention attains the intended purposes.

By the process and the apparatus in question it is in fact possible to find the end of a tape wound onto a supply reel in a quick and precise manner so as to enable said end to be engaged by an automatic device adapted to make the tape ready for a cassette loading machine.

It will be also recognized that advantageously said process and apparatus are very reliable independently of the outer diameter exhibited by the reels used.

## Claims

1. A process for finding one end of a magnetic tape wound onto a reel in automatic cassette loading machines, the tape end (8a) being fastened to the reel (9) by a closure tab (22) exhibiting a free portion (22b) oriented outwardly to the reel (9) itself, said process comprising the following steps:
- mounting the reel (9) on a support hub (10);
- positioning a reading member (26) at a location diametrically spaced apart from the reel (9);
- driving the reel (9) in rotation;
- moving the reading member (26) close to the reel (9), in a direction at right angles to the axis of the reel itself, until the peripheral edge of the reel (9) is intercepted by the reading member (26);
- moving away the reading member (26) a predetermined amount from the reel (9);
- stopping the reel rotation as soon as the reading member (26) intercepts the closure tab (22) in order to dispose said tab in a predetermined position.

2. An apparatus in automatic cassette loading machines including a reel (9), for finding one end of a magnetic tape wound on said reel (9), the tape end (8a) being fastened to the reel (9) by a closure tab (22) exhibiting a free portion (22b), oriented outwardly to the reel itself (9), the apparatus comprising:
- a support hub (10) operable in rotation and adapted to operatively engage the reel (9);
- a main carriage (13) movable according to a direction at right angles to the reel (9) axis; and
- a reading member (26) operatively supported by the main carriage (13), characterised in that said apparatus further comprises:
- means to move the reading member (26) with the main carriage (13) close to the reel until the peripheral edge of the reel is intercepted by the reading member;
- means to move the reading member from the position it intercepts the reel to a predetermined distance from the reel; and
- means to stop the reel rotation when the reading member intercepts the closure tab.

3. An apparatus according to claim 2, characterized in that said reading member (26) comprises a photoelectric cell (30) provided with a photoemitter (30a) and a photoreceiver (30b) fastened to the opposite ends (31a) of a fork-shaped element (31) defining an engagement housing (32) between said ends (31a) which is adapted to accommodate the peripheral edge of said reel (9).

4. An apparatus according to claim 3, characterized in that said photoemitter (30a) emits a light beam "L" inclined to the axis of the reel (9).

5. An apparatus according to claim 4, characterized in that said angle of inclination of said light beam "L" relative to the reel axis has a value in the range of 30° to 60°.

6. An apparatus according to claim 2, characterized in that said reading member (26) is fastened to a support arm (27) extending downwardly from the main carriage (13) and movable parallelly to the axis of said reel (9) so as to bring the reading member (26) from a rest position in which it is axially spaced apart from the reel (9) to a working position in which it substantially operates in the same lying plane as the reel.

7. An apparatus according to claim 6, characterized in that said support arm (27) is associated with a grasping member (23) designed to pick up the closure tab (22) disposed in said predetermined position, said grasping member (239 being movable at right angles to the movement direction of the main carriage (13) so as to engage the magnetic tape (8) between a plurality of members being part of the cassette loading machine (2), simultaneously with the movements carried out by the main carriage itself (13).

## Patentansprüche

1. Verfahren zum Auffinden eines Endes eines Magnethandes, das auf einer Spule in automatischen Kassettenladegeräten aufgewickelt ist, wobei das Ende (8a) des Bandes an der Spule (9) mittels einer Verschlußzunge (22) befestigt ist, die einen freien nach außen der Spule selbst (9) gerichteten Abschnitt (22a) aufweist, wobei das Verfahren folgende Schritte umfaßt:
- Anbringung der Spule (9) auf einer Lagernabe (10);
- Positionierung eines Leseorgans (26) in einer von der Spule (9) diametral beabstandeten Stellung;
- Drehantrieb der Spule (9);
- Anstellung des Leseorgans (26) an die Spule (9) in einer zur Achse der Spule selbst senkrechten Richtung, bis der Außenrand der Spule (9) nicht mehr von dem Lesorgan (26) erfaßt wird;
- Entfernung des Leseorgans (26) von der Spule (9) um einen vorbestimmten Betrag;
- Anhalten der Drehung der Spule, sobald das Leseorgan (26) die Verschlußzunge (22) erfaßt, um die Verschlußzunge in eine vorbestimmte Stellung zu bringen.

2. Vorrichtung an automatischen Kassettenladegeräten mit einem Magnetband, umfassend eine Spule (9), zum Auffinden eines Endes eines auf der Spule (9) aufgewickelten Magnetbandes, wobei das Ende (8a) des Magnetbandes an der Spule (9) durch eine Schließzunge (22) befestigt ist, die einen Endabschnitt (22b) aufweist, der gegenüber der Spule (9) nach außen gerichtet ist, wobei die Vorrichtung umfaßt:
- eine Lagernabe (10), die drehantreibbar und dazu bereitgestellt ist, die Spule (9) antriebsmäßig zu ergreifen;
- einen Hauptschlitten (13), der längs einer zur Achse der Spule (9) senkrechten Richtung beweglich ist; und
- ein Leseorgan (26), das von dem Hauptschlitten (13) wirksam getragen wird, dadurch gekennzeichnet, daß die Vorrichtung überdies umfaßt:
- Mittel zur Verstellung des Leseorgans (26) mit dem Hauptschlitten (13) in die Nähe der Spule, bis der Umfangsrand der Spule vom Leseorgan erfaßt wird;
- Mittel zur Entfernung des Leseorgans aus der Stellung, in der es die Spule erfaßt, in einem vorbestimmten Abstand von der Spule selbst; und
- Mittel zum Anhalten der Drehung der Spule, sobald das Leseorgan die Verschlußzunge erfaßt.

3. Vorrichtung nach Anspruch 2, dadurch gekennzeichnet, daß das Leseorgan (26) eine Photozelle (30) mit einem Photoemitter (30a) und einem Photoempfänger (30b) umfaßt, die an den abgewandten Enden (31a) eines Gabelteils (31) befestigt sind, der eine Eingriffaufnahme (32) zwischen den erwähnten Enden (31a) festlegt, wobei diese Aufnahme zur Aufnahme des Umfangsrandes der Spule (9) bestimmt ist.

4. Vorrichtung nach Anspruch 3, dadurch gekennzeichnet, daß der Photoemitter (30a) ein Lichtbündel "L" aussendet, das gegenüber der Achse der Spule (9) geneigt ist.

5. Vorrichtung nach Anspruch 4, dadurch gekennzeichnet, daß die Neigungsachse des Lichtbündels "L" gegenüber der Achse der Spule einen Betrag zwischen 30° und 60° besitzt.

6. Vorrichtung nach Anspruch 2, dadurch gekennzeichnet, daß das Leseorgan (26) an einem Tragarm (27) befestigt ist, der sich vom Hauptschlitten (13) nach unten erstreckt und parallel zur Achse der Spule (9) derart beweglich ist, daß das Leseorgan (26) von einer Ruhestellung, in der es axial von der Spule (9) beabstandet ist, in eine Arbeitsstellung gebracht wird, in der es im wesentlichen in derselben Ebene wirkt, in der die Spule liegt.

7. Vorrichtung nach Anspruch 6, dadurch gekennzeichnet, daß der Tragarm (27) einem Greiforgan (32) zugeordnet ist, der dazu bestimmt ist, die in der vorbestimmten Stellung angeordnete Verschlußzunge (22) zu ergreifen, wobei das Greiforgan (23) senkrecht zur Bewegungsrichtung des Hauptschlittens (13) derart beweglich ist, daß das Magnetband (8) zwischen einer Vielzahl von Organen erfaßt wird, die dem Kassettenladegerät (2) angehören, zusammen mit den vom Hauptschlitten selbst (13) ausgeführten Bewegungen.

## Revendications

1. Procédé pour trouver l'extrémité d'une bande magnétique enroulée autour d'une bobine dans un appareil de chargement automatique de cassettes, l'extrémité (8a) de la bande étant fixée à la bobine (9) par une languette de fermeture (22) présentant une portion libre (22a) orientée vers l'extérieur de la bobine elle-même (9), ledit procédé comportant les étapes suivantes:
- montage de la bobine (9) sur un moyeu support (10);
- positionnement d'un organe de lecture (26) à une position espacée de la bobine (9) en direction diamétrale;
- entraînement en rotation de la bobine (9);
- avancement de l'organe de lecture (26) vers une position proche de la bobine (9) selon une direction perpendiculaire à l'axe de la bobine elle-même, jusqu'à quand le bord périphérique de la bobine (9) est intercepté par l'organe de lecture (26);
- éloignement de l'organe de lecture (26) de la bobine (9) suivant une distance prédéterminée;
- arrêt de la rotation de la bobine dès que l'organe de lecture (26) intercepte la languette de fermeture (22), dans le but de disposer ladite languette à une position prédéterminée.

2. Dispositif, dans ces appareils de chargement automatique de cassettes comprenant une bobine (9), pour trouver l'extrémité d'une bande magnétique enroulée autour d'une bobine (9), l'extrémité (8a) de la bande étant fixée à la bobine (9) par une languette de fermeture (22) présentant une portion libre (22b) orientée vers l'extérieur de la bobine elle-même (9), le dispositif comprenant:
- un moyeu support (10), susceptible d'entaînement en rotation et destiné à engager fonctionnellement la bobine (9);
- un chariot principal (13) mobile suivant une direction perpendiculaire à l'axe de la bobine (9); et
- un organe de lecture (26) supporté fonctionnellement par le chariot principal (13), caractérisé en ce que ledit dispositif comporte en outre:
- des moyens pour déplacer l'organe de lecture (26), avec le chariot principal (3), proche de la bobine jusqu'à quand le bord périphérique de la bobine est intercepté par l'organe de lecture;
- des moyens pour éloigner l'organe de lecture de la position dans laquelle il intercepte la bobine, selon une distance prédéterminée à partir de la bobine elle-même; et
- des moyens pour arrêter la rotation de la bobine quand l'organe de lecture intercepte la languette de fermeture.

3. Dispositif selon la revendication 2, caractérisé en ce que ledit organe de lecture (26) comporte une cellule photoélectrique (30) ayant un photo-émetteur (30a) et un photo-récepteur (30b) fixés aux extrémités opposées (31a) d'un élément en forme de fourche (31) définissant un siège d'engagement (31) entre lesdites extrémités (31a), ledit siège étant destiné à loger le bord périphérique de ladite bobine (9).

4. Dispositif selon la revendication 3, caractérisé en ce que ledit photo-émetteur (30a) délivre un faisceau lumineux "L" incliné par rapport à l'axe de la bobine (9).

5. Dispositif selon la revendication 4, caractérisé en ce que ledit angle d'inclinaison dudit faisceau lumineux "L" par rapport à l'axe de la bobine a une valeur comprise entre 30° et 60°.

6. Dispositif selon la revendication 2, caractérisé en ce que ledit organe de lecture (26) est fixé à une bras support (27) s'étendant vers le bas à partir du chariot principal (13) et mobile parallèlement à l'axe de ladite bobine (9), de manière à amener l'organe de lecture (26) depuis une position de repos dans laquelle il est espacé axialement de la bobine (9), jusqu'à une position fonctionnelle dans laquelle il opère sensiblement dans le même plan de disposition que celui de la bobine.

7. Dispositif selon la revendication 6, caractérisé en ce que ledit bras support (27) est associé à un organe pinceur (23) destiné à saisir la languette de fermeture (22) disposée à ladite position prédéterminée, ledit organe pinceur (23) étant mobile perpendiculairement à la direction de mouvement du chariot principal (13) de manière à engager la bande magnétique (8) entre une pluralité d'organes faisant partie de l'appareil (2) de chargement de cassettes, cet engagement ayant lieu en même temps que les mouvements du chariot principal lui-même.
